# EUROPEAN PATENT SPECIFICATION

(11) **EP 4 086 894 B1**
(45) Date of publication and mention of the grant of the patent: **06.05.2026**
(21) Application number: 21204719.5
(22) Date of filing: 26.10.2021
(51) Int. Cl.: G10L 15/183, G10L 15/04, G10L 15/16, G10L 15/06, G06F 40/30, G06F 40/284, G06N 3/04

(54) **SEMANTIC RECOGNITION REJECTION METHOD, SEMANTIC RECOGNITION REJECTION APPARATUS, TRANSPORTATION MEANS, AND MEDIUM**
VERFAHREN UND GERÄT ZUR ZURÜCKWEISUNG VON SEMANTISCHER ERKENNUNG, TRANSPORTMITTEL UND MEDIUM
PROCÉDÉ DE REJET DE RECONNAISSANCE SÉMANTIQUE, APPAREIL DE REJET DE RECONNAISSANCE SÉMANTIQUE, MOYENS DE TRANSPORT ET SUPPORT

(30) Priority: 08.07.2021 CN 202110769934
(43) Date of publication of application: 09.11.2022
(73) Proprietor: Guangzhou Xiaopeng Motors Technology Co., Ltd., Guangzhou, Guangdong Province 510000 (CN)
(72) Inventor: HAN, Chuanyu, Guangzhou (CN); YI, Hui, Guangzhou (CN); WENG, Zhiwei, Guangzhou (CN)
(74) Representative: Treeby, Philip David William

(56) References cited:
- CN-A- 113 221 580
- US-A1- 2020 320 985
- KUN JING ET AL: "A Survey on Neural Network Language Models", ARXIV.ORG, CORNELL UNIVERSITY LIBRARY, 201 OLIN LIBRARY CORNELL UNIVERSITY ITHACA, NY 14853, 13 June 2019 (2019-06-13), XP081374949
- DEVLIN JACOB ET AL: "BERT: Pre-training of Deep Bidirectional Transformers for Language Understanding", 24 May 2019 (2019-05-24), XP055834934, Retrieved from the Internet <URL:https://arxiv.org/pdf/1810.04805.pdf> [retrieved on 20210825]

## Description

### Field of Invention

The present application relates to the field of transportation, and in particular, to a semantic recognition rejection method, a semantic recognition rejection apparatus, a transportation means, and a computer-readable storage medium.

### Background

With implementation of intelligence on transportation means, interaction between applications for transportation means and users becomes more and more frequent. At present, in a scene where an in-vehicle voice assistant keeps listening, because an actual interactive environment is complex and changeable, there is often input of noisy speeches in the process of speech interaction, which leads to a wrong response from the in-vehicle voice assistant. In related technologies, the in-vehicle voice assistant can refuse to recognize some speeches based on semantics of the input speeches through a semantic recognition rejection model, so as to increase a recognition rate of the in-vehicle voice assistant. Therefore, an error rate of the semantic recognition rejection model directly affects whether an instruction will be correctly understood and executed, and how to increase a speech recognition rejection rate has become an urgent problem to be solved. US 2020/320985 A1 teaches a method of enhancing an automated speech recognition confidence classifier.

### Summary of Invention

In view of the above-mentioned problems, embodiments of the present disclosure provide a semantic recognition rejection method, a semantic recognition rejection apparatus, a transportation means, and a computer-readable storage medium. In accordance with the present invention, there are provided a semantic recognition rejection method as recited by claim 1, and a semantic recognition rejection apparatus as recited by claim 6. Preferred features are set out in the dependent claims.

In the present disclosure, confidence features are generated based on text generated based on a speech request and a corresponding phrase output confidence value, and confidence features corresponding to a context are merged to generate a target confidence feature, thereby establishing confidence values and the context. After that, a trained semantic recognition rejection model is used to perform a predicting for the target confidence feature to obtain a recognition rejection result. In this manner, accuracy of semantic recognition rejection is improved.

Additional aspects and advantages of the embodiments of the present disclosure will be given in the following description, and some parts will become apparent from the following description, or from the practice of the present disclosure.

### Brief Description of Drawings

The above and/or additional aspects and advantages of the present disclosure will become apparent and easily understood from the description of the embodiments in combination with the accompanying drawings below, in which:
Fig. 1 is a schematic flowchart of a semantic recognition rejection method according to the present disclosure;
Fig. 2 is a schematic block diagram of a semantic recognition rejection apparatus according to the present disclosure;
Fig. 3 is a schematic flowchart of a semantic recognition rejection method according to the present disclosure;
Fig. 4 is a schematic flowchart of a semantic recognition rejection method according to the present disclosure;
Fig. 5 is a schematic flowchart of a semantic recognition rejection method according to the present disclosure;
Fig. 6 is a schematic scenario diagram of a semantic recognition rejection method according to the present disclosure; and
Fig. 7 is a schematic flowchart of a semantic recognition rejection method according to the present disclosure.

### Detailed Description

The embodiments of the present disclosure are described in detail below, and examples of the embodiments are shown in the accompanying drawings. In the drawings, the same or similar reference numerals throughout the text indicate the same or similar elements or elements having the same or similar functions. The embodiments described below by reference to the accompanying drawings are exemplary and are merely intended to explain the embodiments of the present disclosure and are not to be construed as limiting the embodiments of the present disclosure.

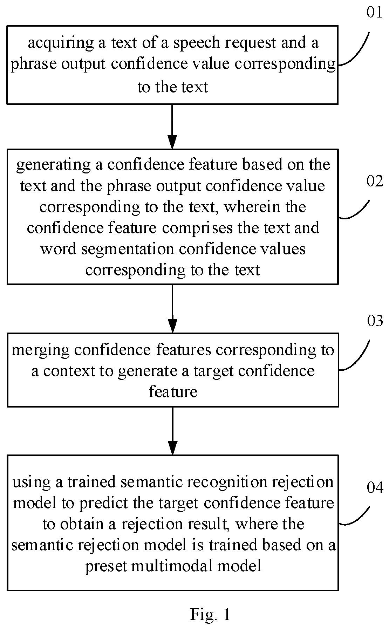

Referring to Fig. 1, the present disclosure provides a semantic recognition rejection method, including the following steps.

In step 01, text of a speech request and a phrase output confidence value corresponding to the text are acquired.

In step 02, a confidence feature is generated based on the text and the corresponding phrase output confidence value. The confidence feature includes the text and word segmentation confidence values corresponding to the text.

In step 03, confidence features corresponding to a context are merged to generate a target confidence feature.

In step 04, a trained semantic recognition rejection model is used to perform a prediction for the target confidence feature to obtain a recognition rejection result. The semantic recognition rejection model is trained based on a preset multimodal model.

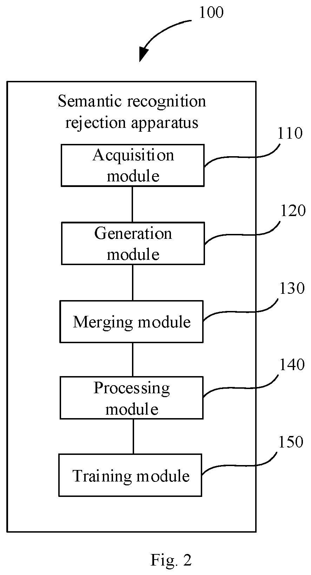

Accordingly, referring to Fig. 2, embodiments of the present disclosure further provide a semantic recognition rejection apparatus 100. The semantic recognition rejection method according to the embodiments of the present disclosure can be implemented by the semantic recognition rejection apparatus 100.

The semantic recognition rejection apparatus 100 includes an acquisition module 110, a generation module 120, a merging module 130 and a processing module 140. Step 01 may be implemented by the acquisition module 110; step 02 may be implemented by the generation module 120; step 03 may be implemented by the merging module 130; and step 04 may be implemented by the processing module 140. In other words, the acquisition module 110 is configured to pre-acquire text of a speech request and a phrase output confidence value corresponding to the text; the generation module 120 is configured to generate a confidence feature based on the text and the corresponding phrase output confidence value, the confidence feature including the text and word segmentation confidence values corresponding to the text; the merging module 130 is configured to merge confidence features corresponding to a context to generate a target confidence feature; and the processing module 140 is configured to use a trained semantic recognition rejection model to perform a prediction for the target confidence feature to obtain a recognition rejection result, where the semantic recognition rejection model is trained based on a preset multimodal model.

Embodiments of the present disclosure further provide a transportation device. The transportation device includes a memory and a processor. A computer program is stored in the memory. The processor is configured to: acquire text of a speech request and a phrase output confidence value corresponding to the text; generate a confidence feature based on the text and the corresponding phrase output confidence value, the confidence feature including the text and word segmentation confidence values corresponding to the text; merge confidence features corresponding to a context to generate a target confidence feature; and use a trained semantic recognition rejection model to perform a prediction for the target confidence feature to obtain a recognition rejection result, the semantic recognition rejection model being trained based on a preset multimodal model.

The transportation means may be, but is not limited to, a vehicle, a flying car, a high-speed train, etc. The transportation means may include a speech recognition device for speech interaction. Take a vehicle as an example. The vehicle includes a speech recognition device. The speech recognition device of the vehicle may include a microphone, a speaker box, a processor and the like.

For ease of description, an embodiment is described below by taking the vehicle as an example.

Specifically, in step 01, the text of the speech request and the phrase output confidence value corresponding to the text are words generated after semantic understanding of an audio input by a user and a phrase output confidence value corresponding to the words during the interaction between the user and a speech recognition device. A phrase output confidence value corresponding to text indicates accuracy of words generated after semantic understanding of a speech. A format of the text generated by the speech recognition device based on semantic interpretation of a speech request is: [{"conf":phrase output confidence, "end":end time, "pronunciation":"phrase pronunciation", "start":start time, "word":"text"}]. The confidence value ranges from 0 to 1, and is expressed in at most three significant digits, such as 0.375. The higher a confidence is, the more consistent a generated text is with a speech request.

For example, if the speech request input by the user is "ple 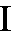 " (i.e., play), then the speech recognition device generates, based on the speech request, [{"conf":0.355, "end":900, "pronunciation": "pler", "start":700, "word":"play"], in which "play" is the generated text, 0.355 is the phrase output confidence value of the text "play", 700 is the start time, and 900 is the end time. That is, the text generated by the speech recognition device based on the user's speech request "ple 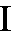 " is "play", and the phrase output confidence value of "play" is 0.355. Therefore, the text generated based on the speech request and the phrase output confidence value are: play/0.355.

In step 02, there may be multiple confidence features. The multiple confidence features may be generated based on a text generated within a predetermined time period and a phrase output confidence value corresponding to the text. For example, the text generated based on the speech request and the phrase output confidence value corresponding to the text are segmented into multiple parts based on generation time, a text and a phrase output confidence value corresponding to the text in each part forming one confidence feature.

A word segmentation confidence value refers to a confidence value corresponding to each word in the text. It can be understood that when the speech recognition device performs semantic understanding of a semantic request, the speech recognition device usually performs semantic understanding of a speech request input within a certain period of time on a phrase basis. For example, if the speech request is " 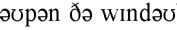 " (i.e., open the window), then two phrases namely "open" and "the window" as well as phrase output confidence value corresponding respectively to "open" and "the window" are generated based on the semantics of "open the window". A phrase consists of words, and therefore, word segmentation confidence values can be obtained based on a phrase output confidence value.

Specifically, after the text and the phrase output confidence value corresponding to the text are obtained based on the speech request, a word segmentation confidence value corresponding to each word in each phrase is obtained based on each phrase output confidence value, and then a confidence feature is generated through processing based on the text and the word segmentation confidence values corresponding to the text. That is, the confidence feature includes the text and the confidence values corresponding to the text.

Further, in step 03, confidence features corresponding to the context may be merged based on the semantics of the text in the confidence features to generate the target confidence feature. For example, text in confidence features corresponding to a context may include "open the window", "air conditioner" and "23 degrees". In this case, confidence features corresponding to the text "air conditioner" and "23degrees" may be merged based on the text in the confidence features corresponding to the context to generate a target confidence feature.

In step 04, the semantic recognition rejection model may be a prediction model in a bidirectional encoder representation from transformers (BERT) model, and the preset multimodal model is a training model in the BERT model. The BERT model is a pre-trained language representation model. The BERT model emphasizes that instead of using a conventional unidirectional language model or latent splicing of two unidirectional language models for pre-training, a novel masked language model (MLM) is adopted, so that deep bidirectional language representation can be generated.

In the semantic recognition rejection method, the semantic recognition rejection apparatus 100 and the vehicle according to the present disclosure, a confidence feature is generated based on text generated based on a speech request and a corresponding phrase output confidence value, and confidence features corresponding to a context are merged to generate a target confidence feature, so that the target confidence feature includes data about the text of the context as well as the confidence values corresponding to the text. After that, a trained semantic recognition rejection model is used to perform a prediction for the target confidence feature to obtain a recognition rejection result. An accuracy rate of semantic recognition rejection is thus increased.

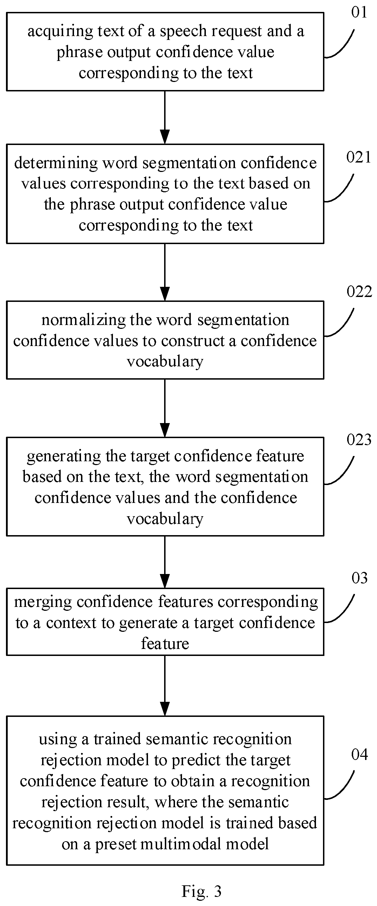

Preferably, referring to Fig. 3, step 02 includes the following steps.

In step 021, word segmentation confidence values corresponding to the text are determined based on the phrase output confidence value corresponding to the text.

In step 022, the word segmentation confidence values are normalized to construct a confidence vocabulary.

In step 023, the confidence feature is generated based on the text and the confidence vocabulary.

Further referring to Fig. 2, steps 021-023 may be implemented by the generation module 120. In other words, the generation module 120 is configured to determine word segmentation confidence values corresponding to the text based on the phrase output confidence value corresponding to the text, normalize the word segmentation confidence values to construct a confidence vocabulary, and generate a target confidence feature based on the text and the confidence vocabulary.

The processor is configured to determine word segmentation confidence values corresponding to the text based on the phrase output confidence value corresponding to the text, normalize the word segmentation confidence values to construct a confidence vocabulary, and generate a target confidence feature based on the text and the confidence vocabulary.

Specifically, the phrase output confidence value corresponding to each phrase is obtained, and two equal word segmentation confidence values are generated from each phrase output confidence value, each word segmentation confidence value corresponding to one word. In an example, a word segmentation confidence value generated from a phrase output confidence value is the same as the phrase output confidence value.

For example, the speech recognition device generates the following based on the semantic understanding of a speech input by the user: [{"conf":0.99, "end":900, "pronunciation":"/pli:z 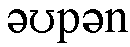 ", "start":750, "word":"please open"} {"conf':0.4, "end":1300, "pronunciation": " 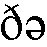 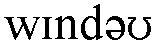 ", "start":1050, "word":"the window"}, {"conf":0.739, "end":1550, "pronunciation":" 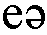 spi:d", "start":1350, "word":"air speed"}, {"conf":1, "end":1700, "pronunciation":"sek 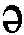 nd" , "start":1650, "word":"second"}, {"conf":1, "end":1850, "pronunciation": " 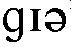 ", "start":1800, "word": "gear" }].

Then, the text and the word segmentation confidence values corresponding to the text are: please open the window air speed second gear\t 0.99, 0.99, 0.400, 0.400, 0.739, 0.739, 1.000, 1.000.

Further, each word segment confidence value is normalized to obtain a target word segment confidence value. A value of each target word segment confidence value ranges from 0 to 1000. For example, the word segmentation confidence values corresponding to the text "please open the window air speed second gear" are t 0.99, 0.99, 0.400, 0.400, 0.739, 0.739, 1.000, 1.000, and after the normalization, the target word output confidence values are t 990, 990, 400, 400, 739, 739, 1000, 1000. Then, a confidence vocabulary corresponding to the text is constructed based on the target word segment confidence values. Each numerical value in the confidence vocabulary may range from 0 to 1002. Among these numerical values, there are one thousand and one numerical values that each range from 0 to 1000 and are used to represent respective word segmentation confidence values, and 1002 is used to separate confidence features corresponding to two contexts.

Finally, the text in the confidence features corresponding to the context and the confidence vocabulary corresponding to the text are merged to generate a target confidence feature.

For example, when the text and the word segmentation confidence values corresponding to the text are: please open the window air speed second gear\t 0.99, 0.99, 0.400, 0.400, 0.739, 0.739, 1.000, 1.000, the obtained confidence feature is: please open the window air speed second gear\t 990, 990, 400, 400, 739, 739, 1000, 1000.

In this way, by generating the confidence feature based on the text and the confidence vocabulary, an association between the text and the confidence is established, so that an accuracy rate of semantic recognition rejection can be increased based on the confidence.

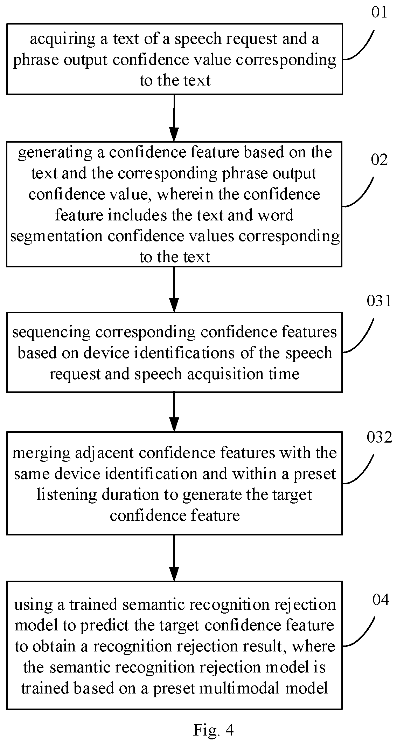

Preferably, referring to Fig. 4, step 03 includes the following steps.

In step 031, corresponding confidence features are sequenced based on device identifications of the speech request and speech acquisition time.

In step 032, adjacent confidence features that have the same device identification and are included within a preset listening duration are merged to generate the target confidence feature.

Step 031 and step 032 may be implemented by the merging module 130. In other words, the merging module 130 is configured to sequence corresponding confidence features based on device identifications of the speech requests and speech acquisition time, and merge adjacent confidence features with the same device identification and included within a preset listening duration to generate the target confidence feature.

The processor is configured to sequence corresponding confidence features based on device identifications of speech requests and speech acquisition time, and merge adjacent confidence features with the same device identification and included within a preset listening duration to generate the target confidence feature.

A device identification may be an identification of a vehicle, an identification corresponding to a speech recognition device, etc. It can be understood that not all speech requests are acquired by a same device, and only confidence features generated based on speech requests acquired by a same device can be merged. Therefore, after the confidence features are acquired, corresponding confidence features can be grouped based on device identifications of the speech requests, and confidence features generated based on speech requests acquired by the same device fall into one group. Further, corresponding confidence features in one group are sequenced based on the speech acquisition time of the speech requests to obtain confidence features corresponding to a context. The speech acquisition time may be two pieces of listening duration. Finally, the confidence features are merged to generate a target confidence feature.

For example, text corresponding to multiple confidence features reads "open the window", "temperature twenty-three degrees", and "air conditioner", respectively, among which terms "temperature twenty-three degrees" and "air conditioner" are generated by a speech recognition device on vehicle No. 2, and "open the window" is generated by a speech recognition device on vehicle No. 3. Moreover, "open the window", "temperature twenty-three degrees" and "air conditioner" are generated at 16:27:00, 16:28:00, and 16:27:55, respectively. In this case, confidence features corresponding to the text "temperature twenty-three degrees" and "air conditioner" can be merged to generate a target confidence feature which is: air conditioner [SEP] temperature twenty-three degrees 1000, 1000, 1002, 1000, 1000, 1000, 1000, in which 1000 is a target word segmentation confidence value, and 1002 serves as a separator.

In this way, an association relationship is established by merging the confidence features corresponding to the context, and thus the accuracy rate of semantic recognition rejection can be increased based on the target confidence feature.

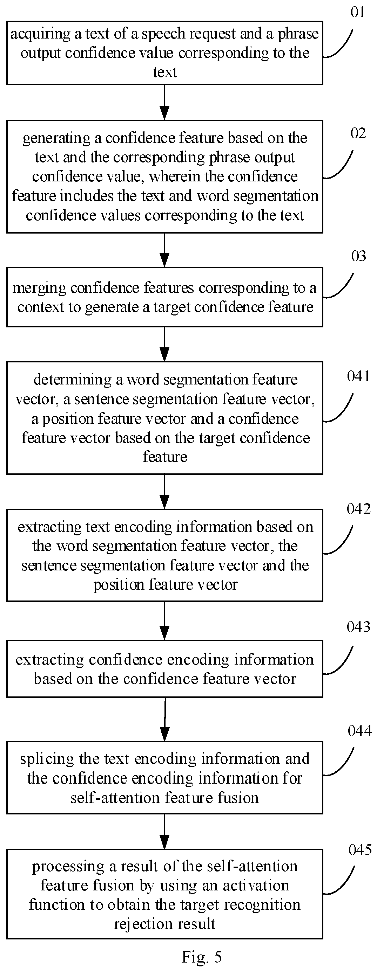

Preferably, referring to Fig. 5, step 04 includes the following steps.

In step 041, a word segmentation feature vector, a sentence segmentation feature vector, a position feature vector and a confidence feature vector are determined based on the target confidence feature.

In step 042, text encoding information is extracted based on the word segmentation feature vector, the sentence segmentation feature vector and the position feature vector.

In step 043, confidence encoding information is extracted based on the confidence feature vector.

In step 044, the text encoding information and the confidence encoding information are spliced to perform self-attention feature fusion.

In step 045, a result of the self-attention feature fusion is processed using an activation function to obtain a recognition rejection result.

Steps 041-045 may be implemented by the processing module 140. In other words, the processing module 140 is configured to determine a word segmentation feature vector, a sentence segmentation feature vector, a position feature vector and a confidence feature vector based on the target confidence feature, extract text encoding information based on the word segmentation feature vector, the sentence segmentation feature vector and the position feature vector, extract confidence encoding information based on the confidence feature vector, splice the text encoding information and the confidence encoding information for self-attention feature fusion, and process a result of the self-attention feature fusion by using an activation function to obtain a recognition rejection result.

The processor is configured to determine a word segmentation feature vector, a sentence segmentation feature vector, a position feature vector and a confidence feature vector based on the target confidence feature, extract text encoding information based on the word segmentation feature vector, the sentence segmentation feature vector and the position feature vector, extract confidence encoding information based on the confidence feature vector, splice the text encoding information and the confidence encoding information for self-attention feature fusion, and process a result of the self-attention feature fusion by using an activation function to obtain a recognition rejection result.

The BERT model includes a Bert-Embedding model, a BERT-Encoder model and a BiLSTM-Encoder model. Step 041 may be implemented by using the Bert-Embedding model. Step 042 may be implemented by using the BERT-Encoder model. Step 043 may be implemented by using the BiLSTM-Encoder model. Embedding is essentially to build a mapping of word embedding from one-hot encoding to a m-dimensional dense vector. The Bert-Embedding model includes a model parameter "asrconf_vocab_size", which is used to represent the size of the word segmentation confidence vocabulary. The BERT-Encoder model is a standard BERT-Encoder model, which may use twelve multi-head-attention layers, one dense layer and one layer normalization, layer_norm, layer.

Specifically, in step 041, starting and ending positions of the target confidence feature are determined. The starting and ending positions represent a starting position and an ending position of the target confidence feature. Furthermore, a hyperparameter is set for the target confidence feature. The hyperparameter of the target confidence feature represents a character length of the target confidence feature and may be set based on the position feature vector and the confidence. The hyperparameter of the target confidence feature may be set up to 33. Furthermore, a complement operation is performed on the target confidence feature based on the starting and ending positions and the size of the hyperparameter. Finally, the word segmentation feature vector, the sentence segmentation feature vector, the position feature vector and the confidence feature vector are determined based on the complemented target confidence feature.

It should be noted that the word segmentation feature vector, the sentence segmentation feature vector, the position feature vector are generated based on the text in the complemented target confidence feature, and that the confidence feature vector is generated based on the target word segmentation confidence values in the target confidence feature. The word segmentation feature vector, the sentence segmentation feature vector, and the position feature vector correspond respectively to token_embedding, segment_embedding, and position_embedding in the BERT model.

For example, the target confidence feature is: please open the window air speed second gear [SEP] temperature twenty-three degrees \t 990, 990, 400, 400, 739, 739, 1000, 1000, 1002, 990, 990, 990, 1000. Then, a target confidence feature obtained after the target confidence feature is complemented is: [CLS] please open the window air speed second gear [SEP] temperature twenty-three degrees 000000000000000000[CLS]\t 1002, 990, 990, 400, 400, 739, 739, 1000, 1000, 1002, 990, 990, 990, 1000, 1002, 1002, 1002 ... 1002.

[CLS] represents a start/end token, and [SEP] represents a separator, each of [CLS] and [SEP] representing one character. 1002 represents a confidence padding token, and 0 represents a text padding token.

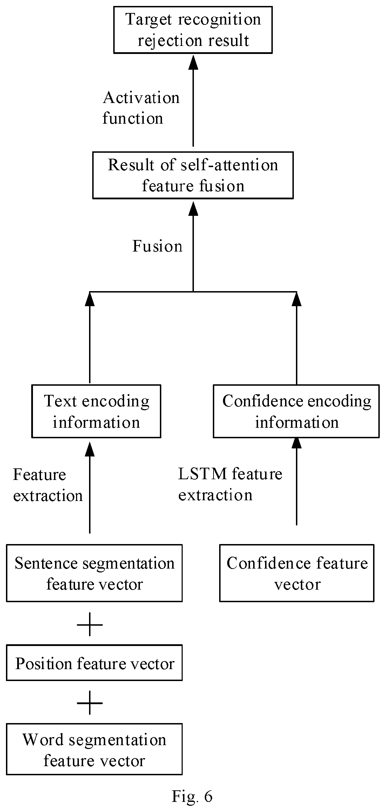

Further, referring to Fig. 6, in step 42, feature extraction may be performed on the word segmentation feature vector, the sentence segmentation feature vector and the position feature vector using the BERT-Encoder model to obtain the text encoding information. The text encoding information is [batch_size, max_seq_length, hidden_size], where hidden_size indicates the size of a hidden layer, length indicates a length, and batch_size indicates a batch size.

In step 43, single-layer bidirectional LSTM feature extraction is performed on the confidence feature vector using the BiLSTM-Encoder model to obtain the confidence encoding information. The confidence encoding information is: [batch_size, max_seq_length, hidden _size], where hidden_size indicates the size of the hidden layer, length indicates the number of words, and batch_size indicates the batch size.

Finally, the text encoding information and the confidence encoding information are spliced for self-attention feature fusion to obtain a result of the self-attention feature fusion, which is [batch_size, max_seq_length, 2*hidden_size]. The result of the self-attention feature fusion is processed by using the softmax activation function to obtain a recognition rejection result.

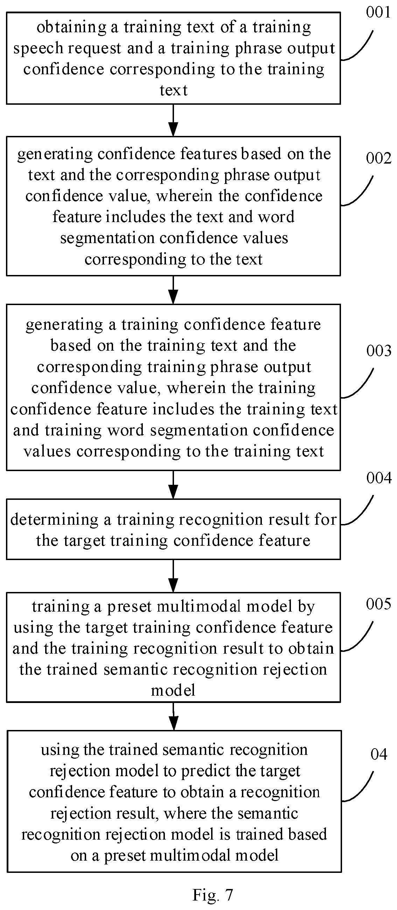

Preferably, referring to Fig. 7, the semantic recognition rejection method further includes the following steps.

In step 001, a training text of a training speech request and a training phrase output confidence value corresponding to the training text are acquired.

In step 002, training confidence features are generated based on the training text and the corresponding training phrase output confidence value, the training confidence feature including the training text and training word segmentation confidence values corresponding to the training text.

In step 003, training confidence features corresponding to a context are merged to generate a target training confidence feature.

In step 004, a training recognition result for the target training confidence feature is determined.

In step 005, the preset multimodal model is trained by using the target training confidence feature and the training recognition result to obtain the trained semantic recognition rejection model.

The semantic recognition rejection apparatus further includes a training module 150. Step 001 may be implemented by the acquisition module 110; step 002 may be implemented by the generation module 120; step 003 may be implemented by the merging module 130; step 004 may be implemented by the processing module 140; and step 005 may be implemented by the training module 150. In other words, the acquisition module 110 is configured to obtain a training text of a training speech request and a training phrase output confidence value corresponding to the training text; the generation module 120 is configured to generate a training confidence feature based on the training text and the corresponding training phrase output confidence value, the training confidence feature including the training text and training word segmentation confidence values corresponding to the training text; the merging module 130 is configured to merge training confidence features corresponding to the context to generate a target training confidence feature; the processing module 140 is configured to determine a training recognition result for the target training confidence feature; and the training module 150 is configured to train the preset multimodal model by using the target training confidence feature and the training recognition result to obtain the trained semantic recognition rejection model.

The processor is configured to: obtain a training text for training a speech request and a training phrase output confidence value corresponding to the training text; generate a training confidence feature based on the training text and the corresponding training phrase output confidence value, the training confidence feature including the training text and training word segmentation confidence values corresponding to the training text; merge training confidence features corresponding to the context to generate a target training confidence feature; determine a training recognition result for the target training confidence feature; and train the preset multimodal model by using the target training confidence feature and the training recognition result to obtain the trained semantic recognition rejection model.

The preset multimodal model is trained by using the target training confidence feature and the training recognition result to obtain the trained semantic recognition rejection model. In this way, the preset multimodal model may be trained by using the target training confidence feature and the training recognition result to obtain the trained semantic recognition rejection model, and then a recognition rejection result is obtained based on the semantic recognition rejection model.

The training text of the training speech request and the training phrase output confidence value corresponding to the training text are collected and recognized results.

The training recognition result may be defined by a user or be a corresponding recognition result obtained by recognition and correct execution of an instruction according to historic data.

Embodiments of the present disclosure further provide one or more non-volatile computer-readable storage mediums having a computer program stored thereon. The computer program, when executed by one or more processors, implements a semantic recognition rejection method according to any one of the above-mentioned embodiments. Those skilled in the art may understand that the implementation of all or some of the steps in the methods of the above embodiments can be completed by means of a computer program instructing associated software. The program may be stored on a non-volatile computer-readable storage medium, and may implement, when being executed, for example, the steps in as described in the above method embodiments. The storage medium may be a magnetic disk, an optical disc, a read-only memory (ROM), or the like.

In the description of the present specification, the description with reference to the terms "an embodiment", "some embodiments", "exemplary embodiment", "example", "specific example" or "some examples" means that the specific features, structures, materials or characteristics described in combination with the embodiment or example are included in at least one embodiment or example of the present disclosure. In the present specification, the exemplary representation of the above terms does not necessarily refer to the same embodiment or example. Moreover, the specific features, structures, materials, or characteristics described may be combined in a suitable manner in any one or more embodiments or examples. In addition, those skilled in the art may combine different embodiments or examples and the features of different embodiments or examples described in the present specification together without conflicting with each other. Meanwhile, the description with reference to the terms "first", "second" and the like is intended to distinguish the same type of operations or similar operations. The terms "first" and "second" may be in a logical relationship in some embodiments and may not necessarily be in a logical relationship in some other embodiments, and such a relationship needs to be determined according to the actual embodiment, and should not be determined only by the literal meaning.

Any process or method description in the flowcharts or otherwise described herein may be understood to represent a module, a fragment, or a portion of codes including one or more executable instructions for implementing steps of a particular logical function or process, and the scope of the preferred embodiment of the present disclosure includes additional implementations. Functions may not be executed in the order shown or discussed, including executing according to the functions involved in a substantially simultaneous manner or in a reverse order, as should be understood by those skilled in the art to which the embodiments of the present disclosure belong. Although embodiments of the present disclosure have been shown and described above, it should be understood that the above embodiments are exemplary and are not to be construed as limiting the present disclosure, and that those of ordinary skills in the art may make changes, modifications, substitutions and variations to the above embodiments, with the scope of the invention being defined by the appended claims.

## Claims

1. A semantic recognition rejection method, comprising:
acquiring (01) text of a plurality of speech requests, and a plurality of phrase output confidence values corresponding to the text of the speech requests;
generating (02) a plurality of confidence features based on the text of the speech requests and the phrase output confidence values corresponding to the text of the speech requests, wherein the text is generated within a predetermined time period, wherein each confidence feature comprises the text of the corresponding speech request and word segmentation confidence values corresponding to the text, wherein each word segmentation confidence value is a confidence value corresponding to each word in the text, and wherein each word segmentation confidence value is the same as the corresponding phrase output confidence value;
merging (03) the plurality of confidence features corresponding to a context to generate a target confidence feature; and
using (04) a trained semantic recognition rejection model to perform a prediction for the target confidence feature to obtain a recognition rejection result, wherein the semantic recognition rejection model is trained based on a preset multimodal model; **characterised in that**:
said merging the plurality of confidence features corresponding to a context to generate a target confidence feature comprises:
sequencing (031) corresponding confidence features based on device identifications of the speech requests and speech acquisition time of the speech requests, wherein device identification means identification of the device that acquired the corresponding speech request; and
merging (032) adjacent confidence features to generate the target confidence feature, the adjacent confidence features having the same device identification and being included within a preset listening duration.

2. The semantic recognition rejection method according to claim 1, wherein said generating a plurality of confidence features based on the text and the phrase output confidence values corresponding to the text comprises:
normalizing (022) the word segmentation confidence values to construct a confidence vocabulary; and
generating (023) the confidence feature based on the text and the confidence vocabulary.

3. The semantic recognition rejection method according to claim 1, wherein said using (04) a trained semantic recognition rejection model to perform a prediction for the target confidence feature to obtain a recognition rejection result comprises:
determining (041) a word segmentation feature vector, a sentence segmentation feature vector, a position feature vector and a confidence feature vector based on the target confidence feature;
extracting (042) text encoding information based on the word segmentation feature vector, the sentence segmentation feature vector and the position feature vector;
extracting (043) confidence encoding information based on the confidence feature vector;
splicing (044) the text encoding information and the confidence encoding information to perform self-attention feature fusion; and
processing (045) a result of the self-attention feature fusion using an activation function to obtain the recognition rejection result.

4. The semantic recognition rejection method according to claim 3, wherein:
said extracting text encoding information based on the word segmentation feature vector, the sentence segmentation feature vector and the position feature vector comprises:
performing feature extraction on the word segmentation feature vector, the sentence segmentation feature vector and the position feature vector using a bidirectional encoder representation from transformers Encoder, BERT-Encoder, model to obtain the text encoding information, wherein the BERT-Encoder model comprises a plurality of multi-head-attention layers, a dense layer and a layer normalization, layer_norm, layer; and
said extracting confidence encoding information based on the confidence feature vector comprises:
performing single-layer bidirectional long short-term memory, LSTM, feature extraction on the target confidence feature to obtain the confidence encoding information.

5. The semantic recognition rejection method according to claim 3, further comprising:
acquiring a training text of a training speech request and a training phrase output confidence value corresponding to the training text;
generating a training confidence feature based on the training text and the corresponding training phrase output confidence value, wherein the training confidence feature comprises the training text and training word segmentation confidence values corresponding to the training text;
merging training confidence features corresponding to a context to generate a target training confidence feature;
determining a training recognition result for the target training confidence feature; and
training the preset multimodal model using the target training confidence feature and the training recognition result to obtain the trained semantic recognition rejection model.

6. A semantic recognition rejection apparatus (100), comprising:
an acquisition module (110), configured to acquire text of a plurality of speech requests and a plurality of phrase output confidence values corresponding to the text of the speech requests;
a generation module (120), configured to generate a plurality of confidence features based on the text of the speech requests and the phrase output confidence values corresponding to the text of the speech requests, wherein the text is generated within a predetermined time period, wherein each confidence feature comprises the text of the corresponding speech request and word segmentation confidence values corresponding to the text, wherein each word segmentation confidence value is a confidence value corresponding to each word in the text, and wherein each word segmentation confidence value is the same as the corresponding phrase output confidence value;
a merging module (130), configured to merge the plurality of confidence features corresponding to a context to generate a target confidence feature; and
a processing module (140), configured to use a trained semantic recognition rejection model to perform a prediction for the target confidence feature to obtain a recognition rejection result, wherein the semantic recognition rejection model is trained based on a preset multimodal model; **characterised in that** said merging the plurality of confidence features corresponding to a context to generate a target confidence feature comprises:
sequencing corresponding confidence features based on device identifications of the speech requests and speech acquisition time of the speech requests, wherein device identification means identification of the device that acquired the corresponding speech request; and
merging adjacent confidence features to generate the target confidence feature, the adjacent confidence features having the same device identification and being included within a preset listening duration.

7. A transportation device, comprising memory and a processor, wherein the memory comprises a computer program stored thereon which, when executed by the processor, implements the semantic recognition rejection method according to any one of claims 1 to 5.

8. A non-volatile computer-readable storage medium having a computer program stored thereon which, when executed by one or more processors, implements the semantic recognition rejection method according to any one of claims 1 to 5.

## Patentansprüche

1. Verfahren zur Ablehnung einer semantischen Erkennung, das Folgendes umfasst:
Erfassen (01) eines Textes einer Vielzahl von Sprachanfragen und einer Vielzahl von mit dem Text der Sprachanfragen korrespondierenden Phrasenausgabekonfidenzwerten;
Erzeugen (02) einer Vielzahl von Konfidenzmerkmalen auf der Basis des Textes der Sprachanfragen und der mit dem Text der Sprachanfragen korrespondierenden Phrasenausgabekonfidenzwerte, wobei der Text innerhalb eines vorher festgelegten Zeitraums erzeugt wird, wobei jedes Konfidenzmerkmal den Text der korrespondierenden Sprachanfrage und mit dem Text korrespondierende Wortsegmentierungskonfidenzwerte umfasst, wobei jeder Wortsegmentierungskonfidenzwert ein mit jedem Wort in dem Text korrespondierender Konfidenzwert ist und wobei jeder Wortsegmentierungskonfidenzwert gleich dem korrespondierenden Phrasenausgabekonfidenzwert ist;
Mischen (03) der Vielzahl von mit einem Kontext korrespondierenden Konfidenzmerkmalen, um ein Zielkonfidenzmerkmal zu erzeugen; und
Verwenden (04) eines trainierten Modells zur Ablehnung einer semantischen Erkennung, um eine Vorhersage für das Zielkonfidenzmerkmal durchzuführen, um ein Erkennungsablehnungsergebnis zu erhalten, wobei das Modell zur Ablehnung einer semantischen Erkennung auf der Basis eines vorgegebenen multimodalen Modells trainiert wird; **dadurch gekennzeichnet, dass**:
das Mischen der Vielzahl von mit einem Kontext korrespondierenden Konfidenzmerkmalen, um ein Zielkonfidenzmerkmal zu erzeugen, Folgendes umfasst:
Sequentialisieren (031) korrespondierender Konfidenzmerkmale auf der Basis von Einrichtungsidentifizierungen der Sprachanfragen und einer Spracherfassungszeit der Sprachanfragen, wobei Einrichtungsidentifizierung Identifizierung der Einrichtung, die die korrespondierende Sprachanfrage erfasst hat, bedeutet; und
Mischen (032) benachbarter Konfidenzmerkmale, um das Zielkonfidenzmerkmal zu erzeugen, wobei die benachbarten Konfidenzmerkmale dieselbe Einrichtungsidentifizierung aufweisen und innerhalb einer vorgegebenen Hördauer enthalten sind.

2. Verfahren zur Ablehnung einer semantischen Erkennung nach Anspruch 1, wobei das Erzeugen einer Vielzahl von Konfidenzmerkmalen auf der Basis des Textes und der mit dem Text korrespondierenden Phrasenausgabekonfidenzwerte Folgendes umfasst:
Normalisieren (022) der Wortsegmentierungskonfidenzwerte, um ein Konfidenzvokabular zu erstellen; und
Erzeugen (023) des Konfidenzmerkmals auf der Basis des Textes und des Konfidenzvokabulars.

3. Verfahren zur Ablehnung einer semantischen Erkennung nach Anspruch 1, wobei das Verwenden (04) eines trainierten Modells zur Ablehnung einer semantischen Erkennung, um eine Vorhersage für das Zielkonfidenzmerkmal durchzuführen, um ein Erkennungsablehnungsergebnis zu erhalten, Folgendes umfasst:
Bestimmen (041) eines Wortsegmentierungsmerkmalsvektors, eines Satzsegmentierungsmerkmalsvektors, eines Positionsmerkmalsvektors und eines Konfidenzmerkmalsvektors auf der Basis des Zielkonfidenzmerkmals;
Extrahieren (042) von Textcodierungsinformationen auf der Basis des Wortsegmentierungsmerkmalsvektors, des Satzsegmentierungsmerkmalsvektors und des Positionsmerkmalsvektors;
Extrahieren (043) von Konfidenzcodierungsinformationen auf der Basis des Konfidenzmerkmalsvektors;
Zusammenführen (044) der Textcodierungsinformationen und der Konfidenzcodierungsinformationen, um eine Selbstaufmerksamkeitsmerkmalsfusion durchzuführen; und
Verarbeiten (045) eines Ergebnisses der Selbstaufmerksamkeitsmerkmalsfusion unter Verwendung einer Aktivierungsfunktion, um das Erkennungsablehnungsergebnis zu erhalten.

4. Verfahren zur Ablehnung einer semantischen Erkennung nach Anspruch 3, wobei:
das Extrahieren von Textcodierungsinformationen auf der Basis des Wortsegmentierungsmerkmalsvektors, des Satzsegmentierungsmerkmalsvektors und des Positionsmerkmalsvektors Folgendes umfasst:
Durchführen einer Merkmalsextraktion an dem Wortsegmentierungsmerkmalsvektor, dem Satzsegmentierungsmerkmalsvektor und dem Positionsmerkmalsvektor unter Verwendung eines Bidirectional-Encoder-Representation-from-Transformers-Encoder-Modells, BERT-Encoder-Modells, um die Textcodierungsinformationen zu erhalten, wobei das BERT-Encoder-Modell eine Vielzahl von Multi-Head-Attention-Schichten, eine dichte Schicht und eine Schichtnormalisierungsschicht, layer_norm-Schicht, umfasst; und
das Extrahieren von Konfidenzcodierungsinformationen auf der Basis des Konfidenzmerkmalsvektors Folgendes umfasst:
Durchführen einer Merkmalsextraktion eines einschichtigen bidirektionalen Long Short-Term Memory, LSTM, an dem Zielkonfidenzmerkmal, um die Konfidenzcodierungsinformationen zu erhalten.

5. Verfahren zur Ablehnung einer semantischen Erkennung nach Anspruch 3, das ferner Folgendes umfasst:
Erfassen eines Trainingstextes einer Trainingssprachanfrage und eines mit dem Trainingstext korrespondierenden Trainingsphrasenausgabekonfidenzwerts;
Erzeugen eines Trainingskonfidenzmerkmals auf der Basis des Trainingstextes und des korrespondierenden Trainingsphrasenausgabekonfidenzwerts, wobei das Trainingskonfidenzmerkmal den Trainingstext und mit dem Trainingstext korrespondierende Trainingswortsegmentierungskonfidenzwerte umfasst;
Mischen von mit einem Kontext korrespondierenden Trainingskonfidenzmerkmalen, um ein Zieltrainingskonfidenzmerkmal zu erzeugen;
Bestimmen eines Trainingserkennungsergebnisses für das Zieltrainingskonfidenzmerkmal; und
Trainieren des vorgegebenen multimodalen Modells unter Verwendung des Zieltrainingskonfidenzmerkmals und des Trainingserkennungsergebnisses, um das trainierte Modell zur Ablehnung einer semantischen Erkennung zu erhalten.

6. Vorrichtung (100) zur Ablehnung einer semantischen Erkennung, die Folgendes umfasst:
ein Erfassungsmodul (110), das konfiguriert ist, um einen Text einer Vielzahl von Sprachanfragen und eine Vielzahl von mit dem Text der Sprachanfragen korrespondierenden Phrasenausgabekonfidenzwerten zu erfassen;
ein Erzeugungsmodul (120), das konfiguriert ist, um eine Vielzahl von Konfidenzmerkmalen auf der Basis des Textes der Sprachanfragen und der mit dem Text der Sprachanfragen korrespondierenden Phrasenausgabekonfidenzwerte zu erzeugen, wobei der Text innerhalb eines vorher festgelegten Zeitraums erzeugt wird, wobei jedes Konfidenzmerkmal den Text der korrespondierenden Sprachanfrage und mit dem Text korrespondierende Wortsegmentierungskonfidenzwerte umfasst, wobei jeder Wortsegmentierungskonfidenzwert ein mit jedem Wort in dem Text korrespondierender Konfidenzwert ist und wobei jeder Wortsegmentierungskonfidenzwert gleich dem korrespondierenden Phrasenausgabekonfidenzwert ist;
ein Mischmodul (130), das konfiguriert ist, um die Vielzahl von mit einem Kontext korrespondierenden Konfidenzmerkmalen zu mischen, um ein Zielkonfidenzmerkmal zu erzeugen; und
ein Verarbeitungsmodul (140), das konfiguriert ist, um ein trainiertes Modell zur Ablehnung einer semantischen Erkennung zu verwenden, um eine Vorhersage für das Zielkonfidenzmerkmal durchzuführen, um ein Erkennungsablehnungsergebnis zu erhalten, wobei das Modell zur Ablehnung einer semantischen Erkennung auf der Basis eines vorgegebenen multimodalen Modells trainiert wird; **dadurch gekennzeichnet, dass** das Mischen der Vielzahl von mit einem Kontext korrespondierenden Konfidenzmerkmalen, um ein Zielkonfidenzmerkmal zu erzeugen, Folgendes umfasst:
Sequentialisieren korrespondierender Konfidenzmerkmale auf der Basis von Einrichtungsidentifizierungen der Sprachanfragen und einer Spracherfassungszeit der Sprachanfragen, wobei Einrichtungsidentifizierung Identifizierung der Einrichtung, die die korrespondierende Sprachanfrage erfasst hat, bedeutet; und
Mischen benachbarter Konfidenzmerkmale, um das Zielkonfidenzmerkmal zu erzeugen, wobei die benachbarten Konfidenzmerkmale dieselbe Einrichtungsidentifizierung aufweisen und innerhalb einer vorgegebenen Hördauer enthalten sind.

7. Transporteinrichtung, die einen Speicher und einen Prozessor umfasst, wobei der Speicher ein darin gespeichertes Computerprogramm umfasst, das, wenn es von dem Prozessor ausgeführt wird, das Verfahren zur Ablehnung einer semantischen Erkennung nach einem der Ansprüche 1 bis 5 implementiert.

8. Nichtflüchtiges computerlesbares Speichermedium mit einem darin gespeicherten Computerprogramm, das, wenn es von einem oder mehreren Prozessoren ausgeführt wird, das Verfahren zur Ablehnung einer semantischen Erkennung nach einem der Ansprüche 1 bis 5 implementiert.

## Revendications

1. Procédé de rejet par reconnaissance sémantique, comprenant les étapes consistant à :
acquérir (01) le texte d'une pluralité de demandes vocales et une pluralité de valeurs de confiance de sortie de phrase correspondant au texte des demandes vocales ;
générer (02) une pluralité de caractéristiques de confiance sur la base du texte des demandes vocales et des valeurs de confiance de sortie de phrase correspondant au texte des demandes vocales, le texte étant généré dans une période de temps prédéterminée, chaque caractéristique de confiance comprenant le texte de la demande vocale correspondante et des valeurs de confiance de segmentation de mot correspondant au texte, chaque valeur de confiance de segmentation de mot étant une valeur de confiance correspondant à chaque mot du texte, et chaque valeur de confiance de segmentation de mot étant identique à la valeur de confiance de sortie de phrase correspondante ;
fusionner (03) la pluralité de caractéristiques de confiance correspondant à un contexte pour générer une caractéristique de confiance cible ; et
utiliser (04) un modèle de rejet par reconnaissance sémantique formé pour réaliser une prédiction concernant la caractéristique de confiance cible pour obtenir un résultat de rejet par reconnaissance, le modèle de rejet par reconnaissance sémantique étant formé sur la base d'un modèle multimodal prédéfini ;
**caractérisé en ce que** :
ladite fusion de la pluralité de caractéristiques de confiance correspondant à un contexte pour générer une caractéristique de confiance cible comprend les étapes consistant à :
séquencer (031) des caractéristiques de confiance correspondantes sur la base d'identifications de dispositif des demandes vocales et du temps d'acquisition vocale des demandes vocales, identification de dispositif désignant l'identification du dispositif qui a acquis la demande vocale correspondante ; et
fusionner (032) des caractéristiques de confiance adjacentes pour générer la caractéristique de confiance cible, les caractéristiques de confiance adjacentes ayant la même identification de dispositif et étant comprises dans une durée d'écoute prédéfinie.

2. Procédé de rejet par reconnaissance sémantique selon la revendication 1, ladite génération d'une pluralité de caractéristiques de confiance sur la base du texte et des valeurs de confiance de sortie de phrase correspondant au texte comprenant les étapes consistant à :
normaliser (022) les valeurs de confiance de segmentation de mot pour construire un vocabulaire de confiance ; et
générer (023) la caractéristique de confiance sur la base du texte et du vocabulaire de confiance.

3. Procédé de rejet par reconnaissance sémantique selon la revendication 1, ladite utilisation (04) d'un modèle de rejet par reconnaissance sémantique formé pour réaliser une prédiction concernant la caractéristique de confiance cible pour obtenir un résultat de rejet par reconnaissance comprenant les étapes consistant à :
déterminer (041) un vecteur de caractéristique de segmentation de mot, un vecteur de caractéristique de segmentation de phrase, un vecteur de caractéristique de position et un vecteur de caractéristique de confiance sur la base de la caractéristique de confiance cible ;
extraire (042) des informations de codage de texte sur la base du vecteur de caractéristique de segmentation de mot, du vecteur de caractéristique de segmentation de phrase et du vecteur de caractéristique de position ;
extraire (043) des informations de codage de confiance sur la base du vecteur de caractéristique de confiance ;
assembler (044) les informations de codage de texte et les informations de codage de confiance pour réaliser une fusion de caractéristiques par auto-attention ; et
traiter (045) un résultat de la fusion de caractéristiques par auto-attention au moyen d'une fonction d'activation pour obtenir le résultat de rejet par reconnaissance.

4. Procédé de rejet par reconnaissance sémantique selon la revendication 3,
ladite extraction d'informations de codage de texte sur la base du vecteur de caractéristique de segmentation de mot, du vecteur de caractéristique de segmentation de phrase et du vecteur de caractéristique de position comprenant l'étape consistant à :
réaliser une extraction de caractéristique sur le vecteur de caractéristique de segmentation de mot, le vecteur de caractéristique de segmentation de phrase et le vecteur de caractéristique de position au moyen d'une représentation par codeur bidirectionnel provenant d'un modèle de codeur transformeur, BERT-Encoder, pour obtenir les informations de codage de texte, le modèle BERT-Encoder comprenant une pluralité de couches d'attention multitêtes, une couche dense et une couche de normalisation de couche, layer_norm ; et
ladite extraction d'informations de codage de confiance sur la base du vecteur de caractéristique de confiance comprenant l'étape consistant à :
réaliser une extraction de caractéristique par mémoire à court et long terme, LSTM, bidirectionnelle monocouche sur la caractéristique de confiance cible pour obtenir les informations de codage de confiance.

5. Procédé de rejet par reconnaissance sémantique selon la revendication 3, comprenant en outre les étapes consistant à :
acquérir un texte de formation d'une demande vocale de formation et une valeur de confiance de sortie de phrase de formation correspondant au texte de formation ;
générer une caractéristique de confiance de formation sur la base du texte de formation et de la valeur de confiance de sortie de phrase de formation correspondante, la caractéristique de confiance de formation comprenant le texte de formation et des valeurs de confiance de segmentation de mot de formation correspondant au texte de formation ;
fusionner des caractéristiques de confiance de formation correspondant à un contexte pour générer une caractéristique de confiance de formation cible ;
déterminer un résultat de reconnaissance de formation pour la caractéristique de confiance de formation cible ; et
former le modèle multimodal prédéfini au moyen de la caractéristique de confiance de formation cible et du résultat de reconnaissance de formation pour obtenir le modèle de rejet par reconnaissance sémantique formé.

6. Appareil de rejet par reconnaissance sémantique (100), comprenant :
un module d'acquisition (110), configuré pour acquérir le texte d'une pluralité de demandes vocales et une pluralité de valeurs de confiance de sortie de phrase correspondant au texte des demandes vocales ;
un module de génération (120), configuré pour générer une pluralité de caractéristiques de confiance sur la base du texte des demandes vocales et des valeurs de confiance de sortie de phrase correspondant au texte des demandes vocales, le texte étant généré dans une période de temps prédéterminée, chaque caractéristique de confiance comprenant le texte de la demande vocale correspondante et des valeurs de confiance de segmentation de mot correspondant au texte, chaque valeur de confiance de segmentation de mot étant une valeur de confiance correspondant à chaque mot du texte, et chaque valeur de confiance de segmentation de mot étant identique à la valeur de confiance de sortie de phrase correspondante ;
un module de fusion (130), configuré pour fusionner la pluralité de caractéristiques de confiance correspondant à un contexte pour générer une caractéristique de confiance cible ; et
un module de traitement (140), configuré pour utiliser un modèle de rejet par reconnaissance sémantique formé pour réaliser une prédiction concernant la caractéristique de confiance cible pour obtenir un résultat de rejet par reconnaissance, le modèle de rejet par reconnaissance sémantique étant formé sur la base d'un modèle multimodal prédéfini ;
**caractérisé en ce que** :
ladite fusion de la pluralité de caractéristiques de confiance correspondant à un contexte pour générer une caractéristique de confiance cible comprend :
le séquençage de caractéristiques de confiance correspondantes sur la base d'identifications de dispositif des demandes vocales et du temps d'acquisition vocale des demandes vocales, identification de dispositif désignant l'identification du dispositif qui a acquis la demande vocale correspondante ; et
la fusion de caractéristiques de confiance adjacentes pour générer la caractéristique de confiance cible, les caractéristiques de confiance adjacentes ayant la même identification de dispositif et étant comprises dans une durée d'écoute prédéfinie.

7. Dispositif de transport, comprenant une mémoire et un processeur, la mémoire comprenant un programme informatique stocké sur celle-ci, qui, lorsqu'il est exécuté par le processeur, met en œuvre le procédé de rejet par reconnaissance sémantique selon l'une quelconque des revendications 1 à 5.

8. Support de stockage non volatil lisible par ordinateur, sur lequel est stocké un programme informatique qui, lorsqu'il est exécuté par un ou plusieurs processeurs, met en œuvre le procédé de rejet par reconnaissance sémantique selon l'une quelconque des revendications 1 à 5.
